# EUROPEAN PATENT APPLICATION

(11) **EP 1 282 285 A2**
(43) Date of publication of application: **05.02.2003**
(21) Application number: 02255057.8
(22) Date of filing: 18.07.2002
(51) Int. Cl.: H04L 29/06

(54) **Presentation of information in networked devices**

(30) Priority: 31.07.2001 US 919782
(71) Applicant: Openwave Systems Inc., Redwood City, CA 94063 (US)
(72) Inventor: King, Peter F., Halt Moon Bay, CA 94019 (US)
(74) Representative: Browne, Robin Forsythe, Dr.

(57) **Abstract**

Improved techniques for presentation of information on devices operating in communication systems are disclosed. An inter-device linking system can be used to inter-link various devices operating in the communication system. The inter-device linking system can detect when information cannot be presented on a first device. Moreover, the inter-device linking system can facilitate presentation of information on a second device. This allows the user to conveniently inter-link various communication devices. As a result, the user can conveniently schedule a device to present information while working on another device.

## Description

### BACKGROUND OF THE INVENTION

### Field of the Invention

The present invention relates to communication systems, and more particularly, to presentation of information on communication devices operating in communication systems.

### Description of the Related Art

Modern communication systems facilitate communication of information in many forms and between various communication devices (e.g., computers, wireless terminals or devices, cellular telephones, pagers, personal digital assistants, etc.). Hypermedia, a term derived from hypertext, extends the notion of the hypertext link to include links among any set of multimedia objects, including sound, motion video, virtual reality, etc.

Today, it is common practice for a user on the Internet (e.g., World Wide Web) to click on a hypertext link. The hypertext link can, for example, be a link to a web page. In any case, in response to clicking on the hypertext link, the user can be provided with sound, motion video, virtual reality, etc. The users of communication systems have also come to expect that the information would be presented to them regardless of the application program that is being using. For example, even though most electronic mail (E-mail) applications can only display text, a browser application is automatically launched when the user clicks on an embedded Uniform Resource Locator (URL). The Uniform Resource Locator can, for example, identify a web page. As a result, the web page is conveniently presented to the user by the browser without the user having to launch the browser or having to enter the Uniform Resource Locator.

In some circumstances, the communication device that is being used is inappropriate for presentation of information. For example, the device may lack the appropriate software application or hardware required to present the information. Unfortunately, conventional communication systems do not provide the user with the option of being presented with the information on another device. In other words, conventional communication systems fail to inter-link devices in situations when one device cannot present information. For example, if the user is unable to view a motion video on a handheld device, the user is not provided with the option of viewing the motion video on a more suitable device (e.g., a computer monitor). This means that the user cannot user the handheld device to request that information be presented to him on another device. The inability of the user to conveniently inter-link communication devices is a serious drawback. Accordingly, there is a need for improved techniques for presentation of information on devices in communication systems.

### SUMMARY OF THE INVENTION

Broadly speaking, the invention relates to improved techniques for presentation of information on devices operating in communication systems. In accordance with one aspect of the invention, an inter-device linking system suitable for operating in a communication system is disclosed. The inter-device linking system can detect when information cannot be presented on a first device. Moreover, the inter-device linking system can facilitate presentation of information on a second device. As will be appreciated, this allows the user to conveniently link various communication devices. As a result, the user can conveniently schedule a communication device to present information while using another communication device.

The invention can be implemented in numerous ways, including as a method, an apparatus, and computer readable media. Several embodiments of the invention are discussed below.

As a communication system, one embodiment of the invention includes a first device, and an inter-device linking system linked to the first device. The inter-device linking system operates to detect that information cannot be presented on the first device, and determines whether a second device capable of presenting the information is linked to the inter-device linking system. A request for presentation of the information is sent to the second device when the inter-device linking system determines that a second device capable of presenting the information is linked.

As a method for presenting information on devices operating in a communication system, one embodiment of the invention includes the acts of detecting that information cannot be presented on a first device, sending a request for presentation of information when the information cannot be presented on the first device, determining whether the information can be presented by a second device, and forwarding a request for presentation of information to the second device when the information can be presented by the second device.

As a communication system, another embodiment of the invention includes a first device, an inter-device linking server, and a first inter-device linking client associated with the first device. The first inter-device linking client operates to detect that information associated with a hypertext link cannot be presented by the first device. In addition, the first inter-device linking client operates to send a linking request to the inter-device linking server when the first inter-device linking client determines that the information cannot be presented by the first device. When the linking request is received by the inter-device linking server, the inter-device linking server operates to determine whether a second device in the communication system which is capable of presenting the information is linked to it. The inter-device linking server operates to forward the queued request for presentation of the information to a second inter-device linking client associated with a second device when the inter-device linking server determines that the information can be presented by a second device. In case, the information cannot be presented by the second device, the inter-device linking server operates to queue the request. The linking server forwards the request to the second inter-device linking client when the second device which is capable of presentation of the information becomes linked to the inter-device linking server.

As a computer readable media including computer program code for presenting information on devices operating in a communication system, one embodiment of the invention includes: computer program code for detecting that information cannot be presented on a first device operating in the communication system; computer program code for sending a request for presentation of information when it is detected that information cannot be presented on the first device; computer program code for determining whether the information can be presented by a second device operating in the communication system; and computer program code for forwarding the request for presentation of information to the second device when it is determined that said information can be presented by said second device.

The advantages of the invention are numerous. Different embodiments or implementations may have one or more of the following advantages. One advantage is that the invention allows various communication devices to be inter-linked together to perform various tasks. Another advantage of the invention is that users can conveniently schedule a communication device to present information while using another device. Yet another advantage is that the invention can be implemented to automatically detect when information cannot be presented on a communication device. Still another advantage of the invention is that information can automatically be presented when a suitable device becomes available.

Other aspects and advantages of the invention will become apparent from the following detailed description, taken in conjunction with the accompanying drawings, illustrating by way of example the principles of the invention.

### BRIEF DESCRIPTION OF THE DRAWINGS

The present invention will be readily understood by the following detailed description in conjunction with the accompanying drawings, wherein like reference numerals designate like structural elements, and in which:

Fig. 1 illustrates an inter-device linking system connected to a communication network.

Fig. 2 illustrates an inter-device linking method in accordance with one embodiment of the invention.

Fig. 3 illustrates a communication system, including an inter-device linking system, in accordance with another embodiment of the invention.

Fig. 4 illustrates an inter-device linking system in accordance with one embodiment of the invention.

Fig. 5 illustrates a presence notification and a linking request in accordance with one embodiment of the invention.

Fig. 6 illustrates inter-device linking message processing in accordance with one embodiment of the invention.

Fig. 7 illustrates a method for sending presence notifications to a server component of an inter-device linking system in accordance with one embodiment of the invention.

Fig. 8 illustrates a method for presenting information associated with a hypertext link on a device in accordance with one embodiment of the invention.

Fig. 9 illustrates a method for processing forwarded inter-device linking requests in accordance with one embodiment of the invention.

### DETAILED DESCRIPTION OF THE INVENTION

The invention pertains to improved techniques for presentation of information on devices operating in communication systems. In accordance with one aspect of the invention, an inter-device linking system suitable for operating in a communication system is disclosed. The inter-device linking system can detect when information cannot be presented on a first device. Moreover, the inter-device linking system can facilitate presentation of information on a second device. As will be appreciated, this allows the user to conveniently link various communication devices. As a result, the user can conveniently schedule a communication device to present information while using another communication device.

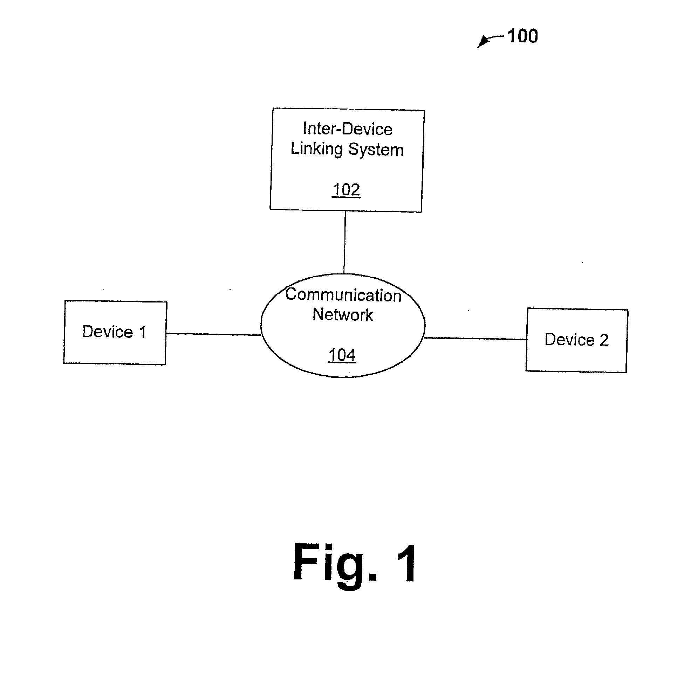

Embodiments of the invention are discussed below with reference to Figs. 1 - 9. However, those skilled in the art will readily appreciate that the detailed description given herein with respect to these figures is for explanatory purposes as the invention extends beyond these limited embodiments.

Fig. 1 illustrates a communication system 100 including an inter-device linking system 102 in accordance with one embodiment of the invention. The communication system 100 also includes Devices 1 and 2. These devices represent one or more communication devices operating in the communication network 104 (e.g., a computer, a remote wireless device, cell phone, Personal Digital Assistant, etc.).

As shown in Fig. 1, the inter-device linking system 102 is connected to a communication network 104. Device 1 and Device 2 are also connected to the communication network 104. Accordingly, the inter-device linking system 102 can communicate with Devices 1 and 2 via the network 104. Moreover, the inter-device linking system can detect when a device, for example, Device 1, lacks the capabilities to present information. In such situations, the inter-device linking system 102 can operate to determine whether a second device capable of presenting the information is available in the communication system 100. If a second device capable of presenting the information is available, the inter-device linking system 102 sends a request to the second device. The request can identify the information that needs to be presented, as well as the capabilities that are desired to present the information. As will be appreciated, this allows the information which could not be presented on the first device to be presented on the second device.

In case a second device is not available to present the information, the inter-device linking system 102 can hold a request until an appropriate device becomes available. The request can be sent to the second device when it becomes available. It should be noted that the inter-device linking system 102 has the capability to determine what devices are available in the communication system. As will be appreciated by those skilled in the art, devices can, for example, register with the inter-device linking system 102. This allows the inter-device linking system 102 to determine what devices and what capabilities are available for presenting information.

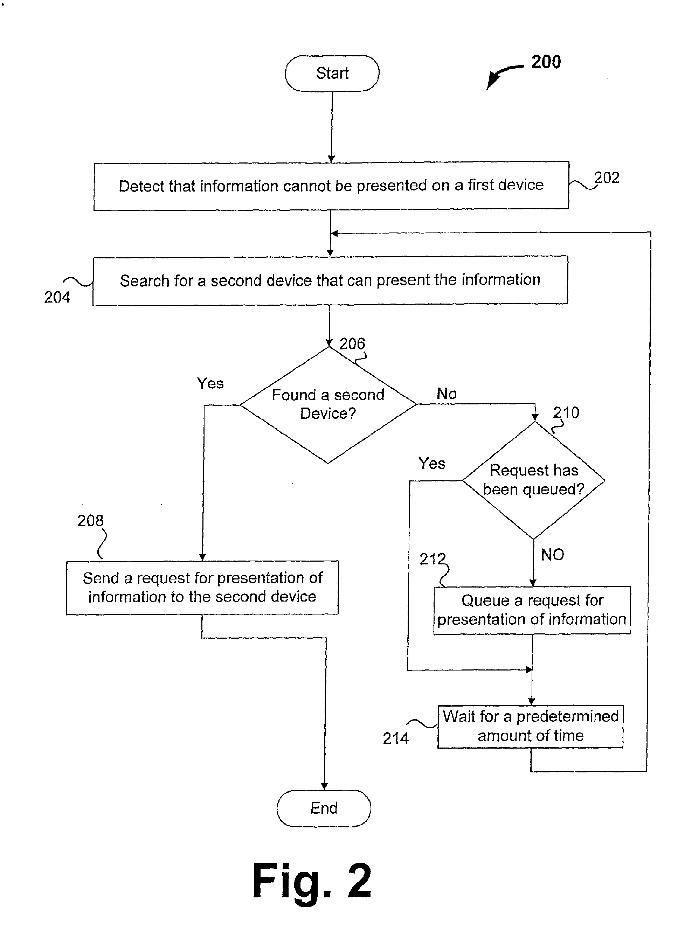

Fig. 2 illustrates an inter-device linking method 200 in accordance with one embodiment of the invention. The inter-device linking method 200 can, for example, be performed by the inter-device linking system 102 of Fig. 1. Initially, at operation 202, it is detected that the information cannot be presented on a first device (e.g., Device 1 of Fig. 1). Next, at operation 204, a search is made for a second device which is capable of presenting the information. Thereafter, at operation 206, a determination is made as to whether the second device has been found. If it is determined at operation 206 that the second device has been found, the inter-device linking method 200 proceeds to operation 208 where a request for presentation of information is sent to the second device. The inter-device linking method 200 ends following operation 208.

On the other hand, if it is determined at operation 206 that a second device has been not found, the inter-device linking method 200 proceeds to operation 210 where a determination is made as to whether a request for presentation of the information has been queued. If it is determined at operation 210 that a request has not been queued, the inter-device linking method 200 proceeds to operation 212 where a request for presentation of information is queued. However, if it is determined at operation 210 that a request has been queued, the operation 212 is bypassed. In any case, at operation 214, a delay for a predetermined amount of time is performed. Thereafter, the inter-device linking method 200 proceeds to operation 204 where a search is made for a second device which is capable of presenting the information. At operation 206, a determination is made as to whether a second device has been found. If it is determined at operation 206 that the second device has been found, the inter-device linking method 200 proceeds to operation 208 where a request for presentation of information is sent to the second device. As will be appreciated, in this manner, a request for presentation of information can be queued and sent when the device with the desired capabilities (i.e., the second device) becomes available. The inter-device linking method 200 ends following the operation 208.

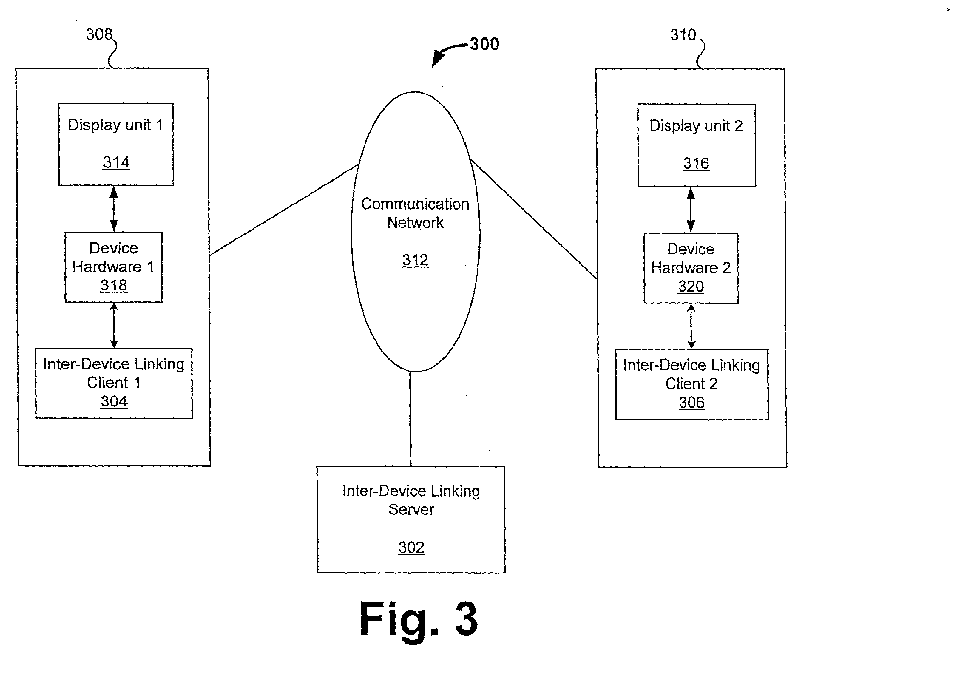

Fig. 3 illustrates a communication system 300 in accordance with another embodiment of the invention. The communication system 300 includes an inter-device linking system comprising an inter-device linking server 302 and inter-device linking clients 304 and 306. The inter-device linking server 302 is connected to a communication network 312. The inter-device linking clients 304 and 306 are also connected to the communication network 312. Accordingly, the inter-device linking server 302 can communicate with the inter-device linking clients 304 and 306 via communication network 312.

In the described embodiment, the inter-device linking clients 304 and 306 are respectively implemented in devices 308 and 310 which are connected to the communication network 312. Each of the devices 308 and 310 include a display unit and device hardware. The display units 314 and 316 can be used to present visual information to the user. The device hardware 318 and 320 can include memory suitable for storing data and application programs. These applications can, for example, include a browser application operating to display information on the display units 314 and 316, an audio or video player, etc. The information displayed on the display units 308 and 310 can, for example, be information associated with a hypertext link.

When the inter-device linking server 302 detects that information cannot be presented on a first device, the inter-device linking server can determine whether another device is available to present the information. For example, if device 308 is unable to display information on display unit 314, the inter-device linking server 302 can determine whether the information can be displayed by another device in the communication network 312. If another device, for example, the device 310, is available and capable of displaying the information, the inter-device linking server 302 sends a request to it. In this way, the information that could not be presented on display unit 314 can be displayed on the display unit 316.

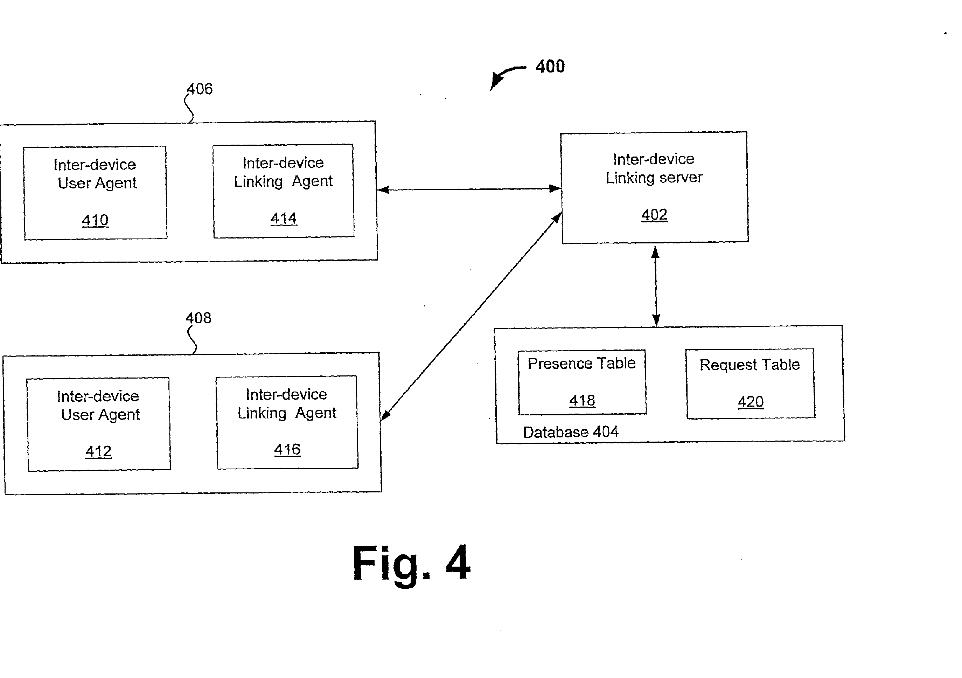

Fig. 4 illustrates an inter-device linking system 400 in accordance with one embodiment of the invention. The inter-device linking system 400 includes an inter-device linking server 402, a database 404, and inter-device linking clients 406 and 408. It should be noted that each of the inter-device linking clients 406 and 408 can be connected to, or can be implemented on, a communication device (not shown). Each of the inter-device linking clients 406 and 408 include a user agent and a linking agent component. A user agent, for example, the user agent 410, can detect when information cannot be presented by its associated device. User agents 410 or 412 can, for example, be implemented in an application program (e.g., a browser). As such, user agents 410 or 412 can, for example, detect when information associated with a hypertext link cannot be presented.

As noted above, each of the inter-device linking clients 406 and 408 also include a linking agent component. These linking agents (414 and 416) can communicate with the inter-device linking server 402 and perform several tasks. A linking agent, for example, the linking agent 414, can periodically form and send "presence" notifications to the inter-device linking server 402. The presence notifications generally inform the inter-device linking server of the availability of the device and its capabilities with respect to presentation of information.

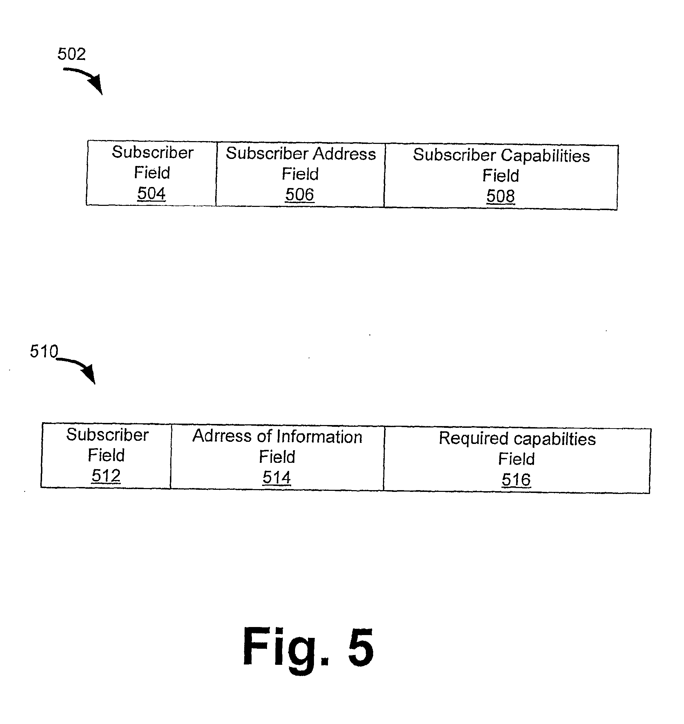

Fig. 5 illustrates a presence notification in accordance with one embodiment of the invention. Referring now to Fig. 5, a presence notification 502 is shown with a subscriber field 504, subscriber address field 506, and a capabilities field 508. The subscriber field 504 and the subscriber address field 506 respectively identify a subscriber (e.g., a user agent associated with a device) and its address in the communication system. The address can, for example, be a TCP/IP "host:port" address at which the linking agent is listening to incoming messages from the inter-device linking server. The capabilities field 508 can, for example, generally describe the capabilities of the associated device by indicating the device type (e.g., a laptop computer, a cell phone, a desktop computer, a handheld device).

Referring back to Fig. 4, the presence notifications that are sent by the linking agents 414 and 416 are stored by the inter-device linking server 402 in the presence table 418 of a database 404. In one embodiment, the inter-device linking server 402 simply time stamps the presence notifications and stores them in the presence table 418. The inter-device linking server 402 can maintain the presence table, for example, by deleting the entries that correspond to linking agents that are no longer available. This can be done, for example, by periodically checking the time stamps of the presence notifications that are stored in the presence table 418.

As noted above, the user agents 410 and 412 can detect when information cannot be presented on their associated devices. In such circumstances, the linking agents 414 and 416 form linking requests for presentation of information. The linking requests are then sent to the inter-device linking server 402. The linking requests can generally describe the information that needs to be presented and the capabilities that are required to present the information.

Referring now to Fig. 5, a linking request 510 is illustrated in accordance with one embodiment of the invention. The linking request 510 includes a subscriber field 512, an address of information field 514, and a required capabilities field 516. The subscriber field 512 identifies the subscriber (e.g., a linking agent) that is making the request for presentation of information. The address of information field 514 identifies where the information that needs to be presented can be found. As such, the address of information field 514 can, for example, be a Uniform Resource Locator (URL). The required capabilities field 516 can, for example, be a list of the capabilities that are required to present the information (e.g., color depth=24, pixel width=200, etc.). As will be appreciated, complex expressions also can be used to describe the desired capabilities (e.g., ((color_depth >= 24) AND (pixel_width= 200)) OR mime:video/mpeg).

In any case, when the inter-device linking server 402 of Fig. 4 receives a linking request, it can search the presence table 418 to determine whether a device with the appropriate capabilities to present the information is available. If the inter-device linking server 402 finds a device with the appropriate capabilities, the inter-device linking server 402 can forward the linking request to the linking agent associated with the appropriate device. The linking agent that receives the linking request can initiate presentation of the information on the device (e.g., launch the appropriate application and provide it with the address of the information that needs to be presented).

On the other hand, if the inter-device linking server 402 cannot find a device with the appropriate capabilities, the inter-device linking server 402 can store the linking request in the request table 420 of the database 404. The request table 420 can periodically be read and searched in order to determine whether a device with the appropriate capabilities has become available. In one embodiment, a request table is created and maintained for each linking agent that makes a linking request.

When a device with the appropriate capabilities becomes available, the inter-device linking server 402 can forward the linking request to the linking agent that is associated with the device. Again, when the linking agent receives the linking request, it can initiate presentation of the information on the device. As will be appreciated, the linking request can be implemented to specify when the information should be presented by the device. Accordingly, the linking request can be queued and presented at the desired time.

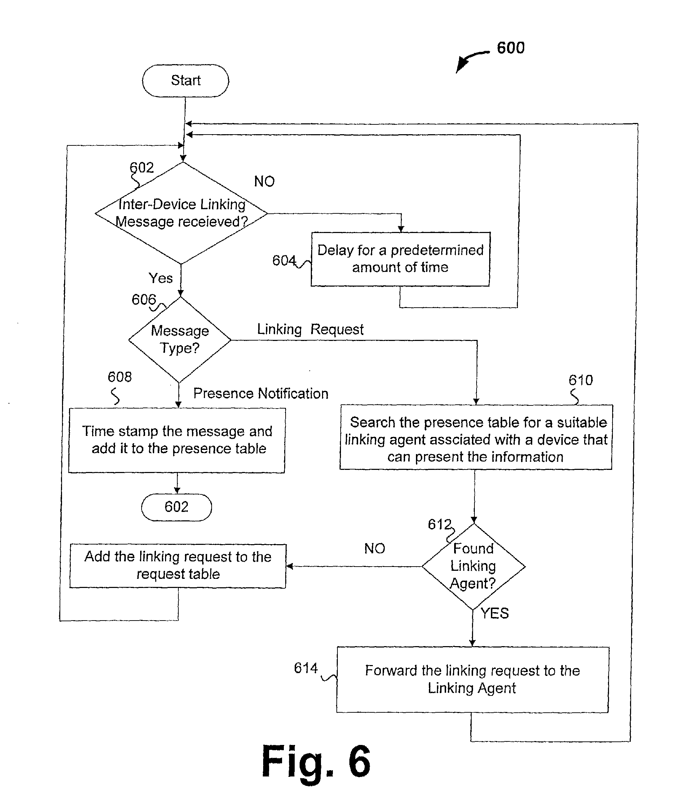

Fig. 6 illustrates inter-device linking message processing 600 in accordance with one embodiment of the invention. The inter-device linking message processing 600 can, for example, be performed by the inter-device linking servers 302 and 402, respectively shown in Figs. 3 and 4. Initially, at operation 602, a determination is made as to whether an inter-device linking message has been received. If it is determined at operation 602 that an inter-device linking message has not been received, a delay for a predetermined amount of time is performed at operation 604 before the determination at operation 602 is repeated.

If it is determined at operation 602 that an inter-device linking message has been received, the inter-device linking message processing 600 proceeds to operation 606 where it is determined which type of inter-device linking message has been received. If it is determined at operation 606 that a presence notification has been received, the inter-device linking message processing method 600 proceeds to operation 608 where the presence notification is time stamped and stored in a presence table. Thereafter, the inter-device linking message processing 600 proceeds to operation 602 where it is determined whether an inter-device linking message has been received.

On the other hand, if it is determined at operation 606 that a linking request has been received, the inter-device linking message processing 600 proceeds to operation 610 where the presence table is searched for a suitable linking agent. The linking agent is associated with a device with the desired capabilities for presentation of the information. Accordingly, at operation 612, a determination is made as to whether an appropriate linking agent has been found. If it is determined at operation 612 that the appropriate linking agent has been found in the presence table, the inter-device linking message processing 600 proceeds to operation 614 where the linking request is forwarded to the appropriate linking agent. Thereafter, the inter-device linking message processing 600 proceeds to operation 602 where it is determined whether an inter-device linking message has been received.

However, if it is determined at operation 612 that the appropriate linking agent has not been found in the presence table, the inter-device linking message processing 600 proceeds to operation 616 where the linking request is added to the request table. Thereafter, the inter-device linking message processing 600 proceeds to operation 602 where it is determined whether an inter-device linking message has been received.

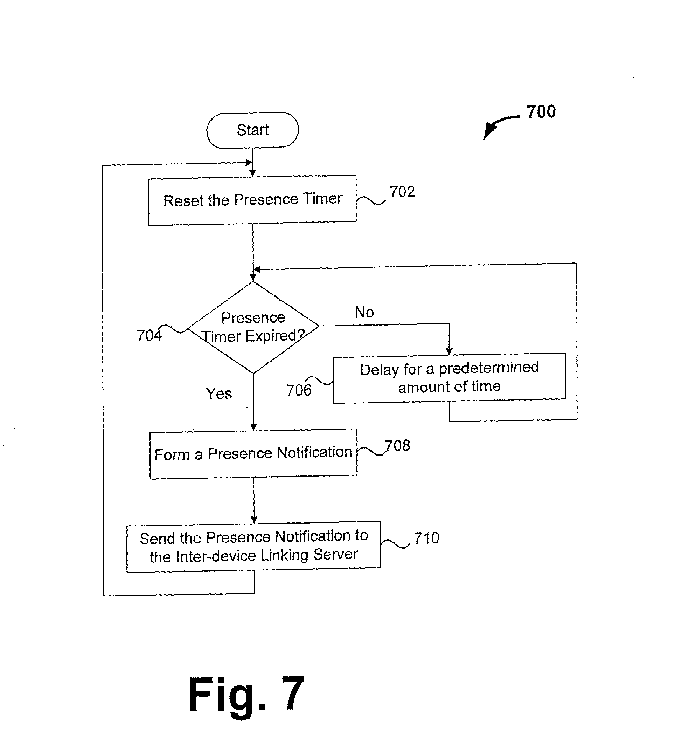

Fig. 7 illustrates a method 700 for sending presence notifications to a server component of an inter-device linking system in accordance with one embodiment of the invention. The method 700 can, for example, be performed by the inter-device linking agents 414 and 416 of Fig. 4 to periodically send presence notifications to the inter-device linking server 402. Initially, at operation 702, the presence timer is reset. Next, at operation 704, it is determined whether the presence timer has expired. If it is determined at operation 704 that the presence timer has not expired, the method 700 proceeds to operation 706 where a delay for a predetermined amount of time is performed. Thereafter, the method 700 proceeds to operation 704 where it is determined whether the presence timer has expired.

On the other hand, if it is determined at operation 704 that the presence timer has expired, the method 700 proceeds to operation 708 where a presence notification is formed. As noted above, the presence notification (e.g., presence notification 502 of Fig. 5) can generally inform the inter-device linking server of the availability of a device and its capabilities. After the presence notification has been formed, the presence notification is sent to the inter-device linking server at operation 710. Thereafter, the method 700 proceeds to operation 702 where the presence timer is reset.

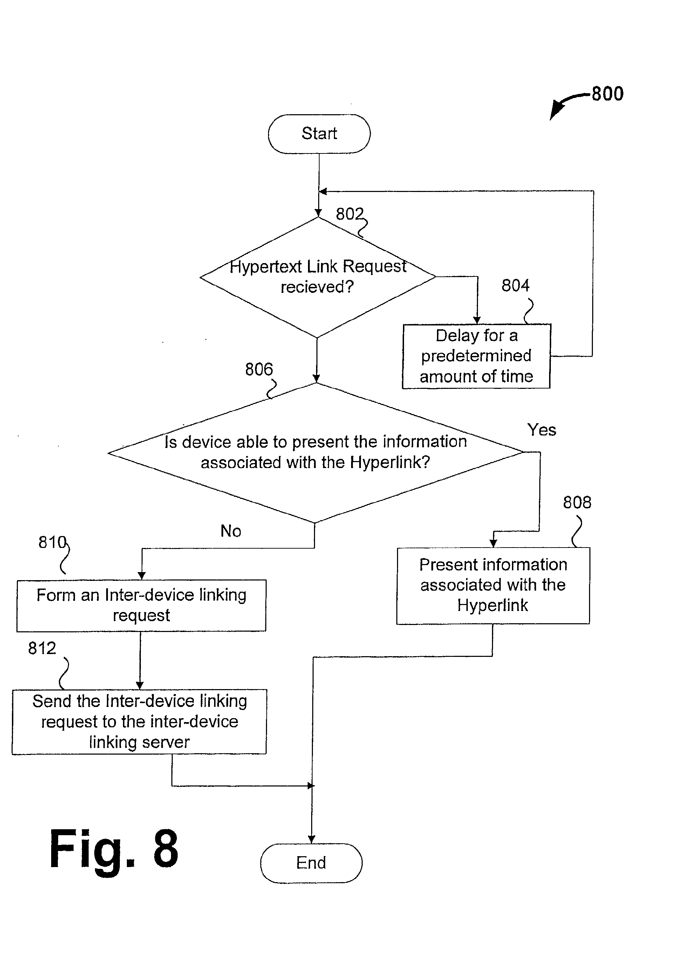

Fig. 8 illustrates a method 800 for presenting information associated with a hypertext link on a device in accordance with one embodiment of the invention. The method 800 can, for example, be performed by the inter-device linking clients 406 and 408 of Fig. 4. Initially, at operation 802, it is determined whether a hypertext link request has been received for processing. In a preferred embodiment, this determination is made by an inter-device user agent (e.g., inter-device user agents 410 or 412 of Fig. 4). The inter-device user agent can, for example, be implemented in an application program (e.g., a browser).

If it is determined at operation 802 that a hypertext link has not been received, the method 800 proceeds to operation 804 where a delay for a predetermined amount of time is performed. Thereafter, at operation 802, a determination is made as to whether a hypertext link is received. If it is determined at operation 802 that a hypertext link has been received, the method 800 proceeds to operation 806 where a determination is made as to whether the information associated with the hypertext link can be displayed by the device. Again, this determination can, for example, be made by an inter-device user agent which may be implemented in an application (e.g., a browser) running on the device.

If it is determined at operation 806 that the information associated with the hypertext link can be presented, the method 800 proceeds to operation 808 where the information associated with the hypertext link is displayed. The method 800 ends following operation 808. However, if it is determined at operation 806 that the information associated with the hypertext link cannot be presented, the method 800 proceeds to operation 810 where an inter-device linking request is formed. In a preferred embodiment, the inter-device linking request is formed by an inter-device linking agent (e.g., inter-device linking agents 414 and 416 of Fig. 4). As noted above, the inter-device linking request (e.g., linking request 510 of Fig. 5) generally describes the information that needs to be presented and the capabilities that are needed to present the information. After the linking request has been formed, it is sent to an inter-device linking server for processing at operation 812. The processing done by the inter-device linking server can, for example, be performed as illustrated by inter-device linking message processing 600 of Fig. 6. The method 800 ends following operation 812.

As illustrated in the inter-device linking message processing 600 of Fig. 6, an inter-device linking request can be processed by an inter-device linking server. The inter-device linking server can forward the linking request to an inter-device linking agent which is associated with a device which has the appropriate capabilities to present the information which could not be displayed on another device.

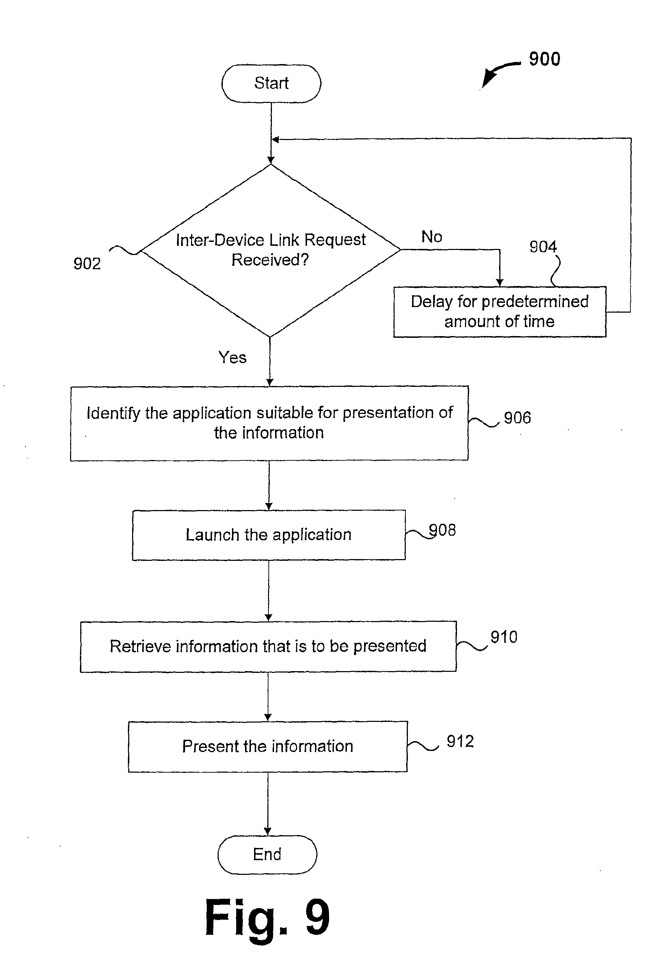

Fig. 9 illustrates a method 900 for processing forwarded inter-device linking requests in accordance with one embodiment of the invention. The method 900 can, for example, be performed by the inter-device linking agents 414 and 416 of Fig. 4. Initially, at operation 902, a determination is made as to whether an inter-device linking request is received. If it is determined at operation 902 that an inter-device linking request has not been received, the method 900 proceeds to operation 904 where a delay for a predetermined amount of time is performed before it is determined at operation 902 whether an inter-device linking request has been received. If it is determined at operation 902 that an inter-device linking request has been received, the method 900 proceeds to operation 906 where an application suitable for presentation of information is identified. Accordingly, at operation 908, the identified application is launched. Next, at operation 910, the information that is needed to be presented is retrieved. It should be noted that information (or a reference) to the information can be provided to the application. Thereafter, at operation 912, the information is presented. The method 900 ends following operation 912.

The advantages of the invention are numerous. Different embodiments or implementations may have one or more of the following advantages. One advantage is that the invention allows various communication devices to be inter-linked together to perform various tasks. Another advantage of the invention is that users can conveniently schedule a communication device to present information while using another device. Yet another advantage is that the invention can be implemented to automatically detect when information cannot be presented on a communication device. Still another advantage of the invention is that information can automatically be presented when a suitable device becomes available.

The many features and advantages of the present invention are apparent from the written description, and thus, it is intended by the appended claims to cover all such features and advantages of the invention. Further, since numerous modifications and changes will readily occur to those skilled in the art, it is not desired to limit the invention to the exact construction and operation as illustrated and described. Hence, all suitable modifications and equivalents may be resorted to as falling within the scope of the invention.

## Claims

1. A communication system, said communication system comprising:
a first device;
an inter-device linking system linked to said first device, said inter-device linking system operating to:
detect that information cannot be presented on said first device;
determine whether a second device capable of presenting said information is linked to said inter-device linking system;
send a request for presentation of said information to said second device when said determining determines that said second device is linked to said inter-device linking system; and
wherein said second device is capable of presenting said information.

2. A communication system as recited in claim 1, wherein said inter-device linking system further operates to:
queue a request for presentation of said information when said determining determines that said second device which is capable of presenting said information is not linked to said inter-device linking system; and
sending said queued request to said second device when said second device becomes linked to said inter-device linking system.

3. A communication system as recited in claim 1, wherein said inter-device linking system comprises an inter-device linking server and two or more inter-device linking clients.

4. A communication system as recited in claim 3, wherein at least one portion of said inter-device linking clients is implemented in a device operating in said communication system.

5. A communication system as recited in claim 3, wherein at least one of said two or more inter-device linking clients comprises a user agent and a linking agent.

6. A communication system as recited in claim 5,
wherein a first user agent is implemented on said first device; and
said first user agent operates to detect that information cannot be presented on said first device.

7. A communication system as recited in claim 6,
wherein said first user agent is implemented in said first device, and
wherein an application program runs on said first device to facilitate presentation of said information on said first device.

8. A communication system as recited in claim 7,
wherein a first linking agent is associated with said first device, and
wherein said first linking agent operates to send said inter-device linking server at least one presence notification, said at least one presence notification notifying said inter-device linking server of the presence of said first device in said communication system.

9. A communication system as recited in claim 7,
wherein said first linking agent operates to periodically send said presence notification,
wherein said presence notification comprises a field that identifies the capabilities of said first device; and
wherein said first linking agent operates to send said inter-device linking server a request for presentation of information when said first user agent operating on said first device detects that information cannot be displayed on said first device.

10. A communication system as recited in claim 7,
wherein said computing system further comprises a database, and
wherein said inter-device linking server operates to store said at least one presence notification in said database.

11. A communication system as recited in claim 7,
wherein said computing system further comprises a database, and
wherein said inter-device linking server operates to store at least one request for presentation of information in said database.

12. A communication system as recited in claim 11,
wherein a second linking agent is associated with said second device, and
wherein said linking agent receives a forwarded request for presentation of information from said inter-device linking server.

13. A communication system as recited in claim 12, wherein said second linking agent initiates launch of an application that is suitable for presentation of said information.

14. A communication system as recited in claim 13, wherein said second linking agent operates to retrieve a reference to information that is to be displayed and provides said reference to said application.

15. A communication system as recited in claim 14, wherein said information is multimedia information associated with a hypertext link.

16. A method for presenting information on devices operating in a communication system, said method comprising:
detecting that information cannot be presented on a first device operating in said communication system;
sending a request for presentation of information when said detecting detects that information cannot be presented on said first device;
determining whether said information can be presented by a second device operating in said communication system; and
forwarding said request for presentation of information to said second device when said determining determines that said information can be presented by said second device.

17. A method as recited in claim 16, wherein said method further comprises:
queuing said request for presentation of information when said determining determines that said information cannot be presented by said second device; and
forwarding said queued request to said second device when it is determined that said information can be presented by said second device.

18. A method as recited in claim 16, wherein said method further comprises:
periodically sending presence notifications, said presence notifications being associated with devices operating in said communication system, and
wherein said presence notifications describe the capabilities of their associated devices with respect to presentation of information on said associated devices.

19. A method as recited in claim 16,
wherein said detecting that information cannot be presented on a first device is performed by a first software module implemented on said first device operating in said communication system; and
wherein said first software module operates to send a request for presentation of said information when said detecting detects that information cannot be displayed by said first device.

20. A method as recited in claim 19,
wherein said determining of whether said information can be presented by a second device is performed by a second software module,
wherein said second software module operates to search a database in order to determine whether a presence notification associated with said second device has been received; and
wherein said presence notification is sent by a third software module associated with said second device.

21. A method as recited in claim 20, wherein said second software module operates to forward said request for presentation of information to said third software module.

22. A communication system, said communication system comprising:
a first device;
an inter-device linking server;
a first inter-device linking client associated with said first device, said first inter-device linking client operating to detect that information associated with a hypertext link cannot be presented by said first device and wherein said first inter-device linking client also operates to send a linking request to said inter-device linking server when said first inter-device linking client determines that said information cannot be presented by said first device;
wherein said inter-device linking server operates to determine whether a second device in said communication system which is capable of presenting said information is linked to said inter-device linking server when said linking request is received from said first inter-device linking client;
wherein said inter-device linking server operates to forward said request for presentation of said information to a second inter-device linking client associated with a second device when said inter-device linking server determines that said information can be presented by said second device;
wherein said inter-device linking server operates to queue said request when said inter-device linking server determines that said information cannot be presented by said second device; and
wherein said inter-device linking server operates to forward said queued request to said second inter-device linking client when said second device which is capable of presentation of said information becomes linked to said inter-device linking server.

23. A communication system as recited in claim 22,
wherein said communication system further comprises a database;
wherein said first and second inter-device linking clients periodically send presence notifications to said inter-device linking server to notify said inter-device linking server of the presence of said first and second devices in said communication system; said presence notifications respectively describing the capabilities of said first and second devices to present information; and
wherein said inter-device linking server operates to time stamp and store said presence notifications in a presence table in said database.

24. A communication system as recited in claim 23,
wherein said inter-device linking server performs a search on said presence table in order to determine whether a second device in said communication system which is capable of displaying said information is linked to said inter-device linking server, and
wherein said inter-device linking server stores said request in a request table in said database when said searching of said presence table determines that a second device capable of displaying said information is not linked to said inter-device linking server.

25. A communication system as recited in claim 24, wherein a request table is created for each inter-device linking client that sends a request to said inter-device linking server.

26. A communication system as recited in claim 24, wherein said inter-device linking server operates to maintain said presence and request tables.

27. A computer readable media including computer program code for presenting information on devices operating in a communication system, said computer readable media comprising:
computer program code for detecting that information cannot be presented on a first device operating in said communication system;
computer program code for sending a request for presentation of information when said detecting detects that information cannot be presented on said first device;
computer program code for determining whether said information can be presented by a second device operating in said communication system; and
computer program code for forwarding said request for presentation of information to said second device when said determining determines that said information can be presented by said second device.

28. A computer readable media as recited in claim 27, wherein said computer readable media comprises:
computer program code for queuing said request for presentation of information when said determining determines that said information cannot be presented by said second device; and
computer program code for forwarding said queued request to said second device when it is determined that said information can be presented by said second device

29. A computer readable media as recited in claim 28,
wherein said detecting that information cannot be presented on a first device is performed by a first software module implemented on said first device operating in said communication system; and
wherein said first software module operates to send a request for presentation of said information when said detecting detects that information cannot be displayed by said first device.

30. A computer readable media as recited in claim 29,
wherein said determining of whether said information can be presented by a second device is performed by a second software module,
wherein said second software module operates to search a database in order to determine whether a presence notification associated with said second device has been received; and
wherein said presence notification is sent by a third software module associated with said second device.
